# FASCICULE DE BREVET EUROPEEN

(11) **EP 0 790 748 B1**
(45) Date de publication et mention de la délivrance du brevet: **09.07.2003**
(21) Numéro de dépôt: 97400314.7
(22) Date de dépôt: 12.02.1997
(51) Int. Cl.: H04Q 7/24

(54) **Procédé de gestion de signalisation dans un système d'autocommutation équipé de bornes radio**
Signalisierungsverwaltungsverfahren in Vermittlungssystem mit Funk-Feststationen
Management method for signalling in a switching system with radio base stations

(30) Priorité: 15.02.1996 FR 9601877
(43) Date de publication de la demande: 20.08.1997
(73) Titulaire: Eads Telecom, 78180 Montigny Le Bretonneux (FR)
(72) Inventeur: Mercuriali, Jean-Pierre, 91400 Orsay (FR); Leger, Marc, 92370 Chaville (FR)
(74) Mandataire: Loisel, Bertrand

(56) Documents cités:
- EP-A- 0 456 547
- EP-A- 0 708 571
- WO-A-93/16543
- WO-A-94/06251
- US-A- 5 461 669
- IEEE COMMUNICATIONS MAGAZINE, vol. 33, no. 6, 1 Juin 1995, pages 66-75, XP000545327 LA PORTA T F: "DISTRIBUTED CALL PROCESSING FOR PERSONAL COMMUNICATIONS SERVICES"
- ERICSSON REVIEW, vol. 70, no. 4, 1 Janvier 1993, pages 156-171, XP000415352 SODERBERG L: "EVOLVING AN INTELLIGENT ARCHITECTURE FOR PERSONAL TELECOMMUNICATION"

## Description

La présente invention concerne un procédé de gestion de signalisation dans un système d'autocommutation équipé de bornes radio pour permettre la connexion de terminaux mobiles.

L'invention s'applique plus particulièrement à un système d'autocommutation dans lequel les points d'accès (lignes vers des terminaux ou des bornes radio, raccordements à des réseaux ou à des lignes spécialisées...) sont organisés en grappes gérées chacune par une unité de contrôle de grappe (UCG). Chaque unité de contrôle de grappe possède une certaine autonomie pour gérer les communications ou autres fournitures de services impliquant les points d'accès qui en dépendent. En particulier, l'UCG comporte une mémoire où sont stockées des tables contenant diverses données relatives aux terminaux qui lui sont reliés et permettant notamment de gérer les facultés dont les terminaux disposent.

Cette architecture matérielle induit le concept logiciel de demi-appel. Les traitements de signalisation concernant l'établissement d'une communication (ou autre fourniture de service) à travers un point d'accès comprennent d'une part des tâches de contrôle du point d'accès pour identifier des événements (décroché, raccroché, numérotation, occupation...) issus du point d'accès et les traduire en messages du système d'autocommutation et pour adresser diverses commandes au point d'accès (sonnerie, tonalités, affichages...), et d'autre part des tâches de gestion d'appel pour traiter les requêtes concernant le point d'accès (en fonction notamment des droits définis dans les tables) et pour superviser les tâches de contrôle du point d'accès. La signalisation relative à une communication entre plusieurs points d'accès procède par des échanges de messages entre les demi-appels concernés. Avantageusement, les tâches de gestion d'appel utilisent des messages selon des formats et protocoles standardisés dans le système d'autocommutation, tandis que les tâches de contrôle de points d'accès assurent les traductions nécessaires pour tenir compte des spécificités propres aux différents types de terminaux ou de réseaux susceptibles d'être raccordés.

L'architecture ci-dessus est bien adaptée au cas de terminaux fixes reliés aux UCG à des adresses invariables. Le demi-appel concernant un tel terminal peut être entièrement exécuté au niveau de l'UCG à laquelle il est raccordé.

La gestion de la signalisation est néanmoins plus complexe en ce qui concerne les terminaux mobiles. Chaque terminal mobile est associé à une UCG de référence où sont stockées les données pertinentes concernant ce terminal. Tant que le terminal mobile reste en liaison avec une ou plusieurs bornes radio reliées à son UCG de référence, les procédures utilisées pour les terminaux fixes sont applicables mutatis mutandis. Mais lorsque le système comporte plusieurs grappes pourvues de bornes radio, il est utile de prévoir des procédures permettant aux terminaux mobiles d'entrer en communication au moyen de bornes radio reliées à des UCG visitées distinctes de leurs UCG de référence. L'absence de telles procédures conduirait à limiter sérieusement l'offre de service mobile.

Deux types de procédures peuvent ainsi être proposées. Dans le premier type de procédure, les données pertinentes concernant le terminal mobile sont transférées de l'UCG de référence vers les UCG visitées lors des déplacements du terminal mobile, ce qui permet d'exécuter les tâches de gestion d'appel dans les UCG visitées. Ce type de procédure a l'inconvénient d'être très complexe en termes de protocole de signalisation, à moins qu'on limite fortement les commodités et services auxquels le terminal mobile peut accéder en dehors de sa grappe de référence.

Le second type de procédure consiste à établir la communication avec le terminal mobile en passant obligatoirement par son UCG de référence. Ceci revient à mettre bout à bout deux communications, l'une entre l'UCG visitée et l'UCG de référence, l'autre entre l'UCG de référence et l'UCG fournissant la connexion avec l'autre terminal impliqué dans la communication. Cette solution n'est pas optimale en termes d'utilisation des canaux disponibles. Par ailleurs, l'offre de services en cours de communication, qui nécessite la connaissance non seulement des droits de l'usager mobile mais également d'éléments de contexte dynamique participant à la décision d'accepter une requête d'un tel service, suppose que les protocoles de signalisation soient enrichis pour permettre d'associer dans l'UCG de référence ce contexte dynamique à deux communications mises bout à bout. Un tel enrichissement de protocole est problématique, particulièrement dans un cadre multisite où les UCG concernées peuvent être situées dans des sites géographiquement distincts.

La publication IEEE COMMUNICATIONS MAGAZINE, vol.33, n°6, 1 juin 1995, pages 66-75, XP000545327 LA PORTA T F: Distributed call processing for personal communications services", propose une architecture réseau répartie par grappes. Chaque grappe comprend des serveurs d'appels résidents, des serveurs de signalisation utilisateurs, des serveurs de connection et différents serveurs de canaux. Des serveurs d'appels en itinérance, des serveurs de localisation visitée et des serveurs de localisation résidente, sont situés à l'extérieur des grappes. Pour délivrer un appel à une station mobile itinérante, la réponse à une demande de localisation du serveur de localisation résidente (à l'extérieur des grappes), donne l'adresse d'un serveur de localisation visitée (à l'extérieur des grappes), ayant repéré la station mobile et l'adresse d'un serveur d'appels en itinérance (à l'extérieur des grappes), attribué à la station mobile. Ceci provoque une seconde opération de localisation par le réseau appelant, invoquée à destination du serveur de localisation temporaire. La réponse à cette requête incluse l'adresse d'un serveur de connection qui servira la station mobile appelée. Un serveur d'appels en itinérance à l'extérieur des grappes, sert la station mobile appelée, contrairement à un serveur de grappe situé dans la grappe dans laquelle la station mobile est couramment localisée.

Un but de la présente invention est de proposer un procédé de gestion efficace de la signalisation relative aux terminaux mobiles qui leur permette d'accéder pratiquement aux mêmes services que les terminaux fixes quel que soit leur localisation au sein du système.

L'invention propose ainsi un procédé de gestion de signalisation dans un système d'autocommutation comprenant plusieurs unités de contrôle de grappe fournissant chacune des points d'accès au système, des bornes radio étant prévues pour procurer des liaisons radio avec des terminaux mobiles et étant reliées chacune à un point d'accès radio d'une unité de contrôle de grappe respective, les terminaux mobiles étant respectivement associés à des unités de contrôle de grappe de référence, procédé dans lequel les traitements de signalisation concernant l'établissement d'une communication à travers un point d'accès comprennent, à l'égard de ce point d'accès, d'une part des tâches de contrôle du point d'accès pour traduire en messages de signalisation du système des événements issus du point d'accès et adresser des commandes au point d'accès, et d'autre part des tâches de gestion d'appel pour traiter des requêtes concernant le point d'accès et superviser les tâches de contrôle du point d'accès lors de l'établissement de la communication. Pour l'établissement d'une communication avec un terminal mobile en liaison avec une borne radio reliée à un point d'accès radio d'une unité de contrôle de grappe visitée différente de l'unité de contrôle de grappe de référence associée audit terminal mobile, les tâches de gestion d'appel relatives audit point d'accès radio sont exécutées dans l'unité de contrôle de grappe de référence et une partie au moins des tâches de contrôle du point d'accès radio est exécutée dans ladite unité de contrôle de grappe visitée, le chemin de trafic établi dans le système d'autocommutation entre le point d'accès radio et un second point d'accès pour supporter la communication étant choisi indépendamment du chemin de signalisation utilisé pour échanger des messages de signalisation propres au système d'autocommutation entre l'unité de contrôle de grappe visitée, l'unité de contrôle de grappe de référence et l'unité de contrôle de grappe dont relève ledit second point d'accès.

Ce procédé de gestion de signalisation montre une grande souplesse pour prendre en compte la mobilité des terminaux. En tout point du système, le terminal mobile peut retrouver ses droits dès qu'il émet une requête (appel ou demande de service). Il peut a priori accéder aux mêmes services qu'un terminal fixe (appel multiple, rappel automatique, entrée en tiers...). Le terminal mobile peut partout exprimer ses requêtes comme s'il était en liaison avec son UCG de référence (il peut notamment en utiliser le plan de numérotation spécifique s'il en existe un), ce qui lui procure un confort d'utilisation maximum. Un autre terminal (fixe ou mobile) peut exercer à l'égard d'un terminal mobile tous les services prévus dans le système puisque les informations utiles à cet égard sont disponibles dans l'UCG de référence où sont exécutées les tâches de gestion d'appel. Cette souplesse d'organisation est obtenue par un mécanisme simple de transport de signalisation, ne nécessitant que peu d'enrichissement de protocoles.

L'invention propose également un procédé de localisation périodique de terminaux mobiles dans un système d'autocommutation équipé de bornes radio, qui s'utilise avantageusement avec le procédé de gestion de signalisation, exposé ci-dessus, mais qui pourrait être appliqué indépendamment. Selon ce procédé de localisation périodique, les unités de contrôle de grappe équipées de bornes radio sont réparties en cellules, et on tient à jour, dans chaque unité de contrôle de grappe de référence, une table de localisation indiquant, pour chaque terminal mobile associé à ladite unité de contrôle de grappe de référence et se trouvant en liaison avec une borne radio, une cellule de localisation incluant au moins l'unité de contrôle de grappe comportant le point d'accès radio auquel est reliée ladite borne radio. Chaque unité de contrôle de grappe comportant au moins un point d'accès radio stocke une liste d'identités de terminaux mobiles desservis, et on exécute des cycles de localisation successifs comportant chacun les étapes suivantes :
- la diffusion par chaque unité de contrôle de grappe de référence d'une liste d'identités de terminaux mobiles recherchés à destination de chaque unité de contrôle de grappe comportant au moins un point d'accès radio ;
- la recherche par chaque unité de contrôle de grappe comportant au moins un point d'accès radio des terminaux identifiés dans sa liste d'identités de terminaux mobiles desservis et des terminaux identifiés dans chaque liste d'identités de terminaux mobiles recherchés reçue d'une unité de contrôle de grappe de référence ;
- la mise à jour de la liste des identités de terminaux mobiles desservis par chaque unité de contrôle de grappe comportant au moins un point d'accès radio avec les identités des terminaux mobiles localisés à l'étape de recherche exécutée par ladite unité de contrôle de grappe comportant au moins un point d'accès radio ;
- l'émission par chaque unité de contrôle de grappe comportant au moins un point d'accès radio, à destination de chaque unité de contrôle de grappe de référence, d'un message de compte rendu incluant une identité de la cellule à laquelle appartient ladite unité de contrôle de grappe comportant au moins un point d'accès radio, et une liste des identités des terminaux mobiles associés à ladite unité de contrôle de grappe de référence pour lesquels l'étape de recherche exécutée par ladite unité de contrôle de grappe comportant au moins un point d'accès radio a échoué ;
- la mise à jour de la table de localisation de chaque unité de contrôle de grappe de référence sur la base des messages de compte rendu qu'elle a reçus ; et
- la construction par chaque unité de contrôle de grappe de référence de la liste des terminaux mobiles recherchés qu'elle diffusera lors du cycle suivant, en y incluant une identité de chaque terminal mobile non incluse dans la liste d'identités de terminaux mobiles recherchés qu'elle a émise au cours du cycle courant et figurant dans une liste qu'elle a reçue dans un desdits messages de compte rendu.

Cette façon de localiser les terminaux mobiles a l'avantage d'être d'une mise en oeuvre simple et de ne requérir qu'un encombrement réduit des canaux de signalisation entre les UCG, puisque les terminaux ne font l'objet de messages diffusés que lorsqu'ils sont hors de portée du système ou au moment où ils changent d'UCG de rattachement. Les cellules peuvent correspondre chacune à une UCG respective équipée de bornes radio. La répartition en cellules peut néanmoins avantageusement être adaptée à l'architecture particulière du réseau privé, en regroupant des UCG dont les bornes radio desservent des zones proches (par exemple la totalité ou une partie d'un site dans le cas d'un système multisite).

D'autres particularités et avantages de l'invention apparaîtront dans la description ci-après d'exemples de réalisation non limitatifs, en référence aux dessins annexés, dans lesquels :
- la figure 1 est un schéma d'un système d'autocommutation pour la mise en oeuvre de l'invention ;
- la figure 2 est un schéma illustrant une unité de contrôle de grappe d'un système selon la figure 1 ;
- la figure 3 est un schéma illustrant les traitements d'appel effectués pour établir une communication entre deux terminaux fixes ;
- la figure 4 est un diagramme illustrant l'établissement d'un appel issu d'un terminal mobile en liaison avec une UCG visitée ;
- la figure 5 est un schéma semblable à celui de la figure 3 dans le cas d'une communication d'un terminal mobile vers un terminal fixe ;
- la figure 6 est un diagramme illustrant l'établissement d'un appel destiné à un terminal mobile en liaison avec une UCG visitée ;
- les figures 7 et 8 sont des schémas semblables à ceux des figures 3 et 5 dans le cas d'une communication d'un terminal fixe vers un terminal mobile et dans le cas d'une communication entre deux terminaux mobiles ;
- la figure 9 est un diagramme illustrant la localisation d'un terminal mobile lors de l'établissement d'un appel qui lui est destiné ; et
- la figure 10 est un diagramme illustrant les étapes d'un cycle de localisation de terminaux mobiles.

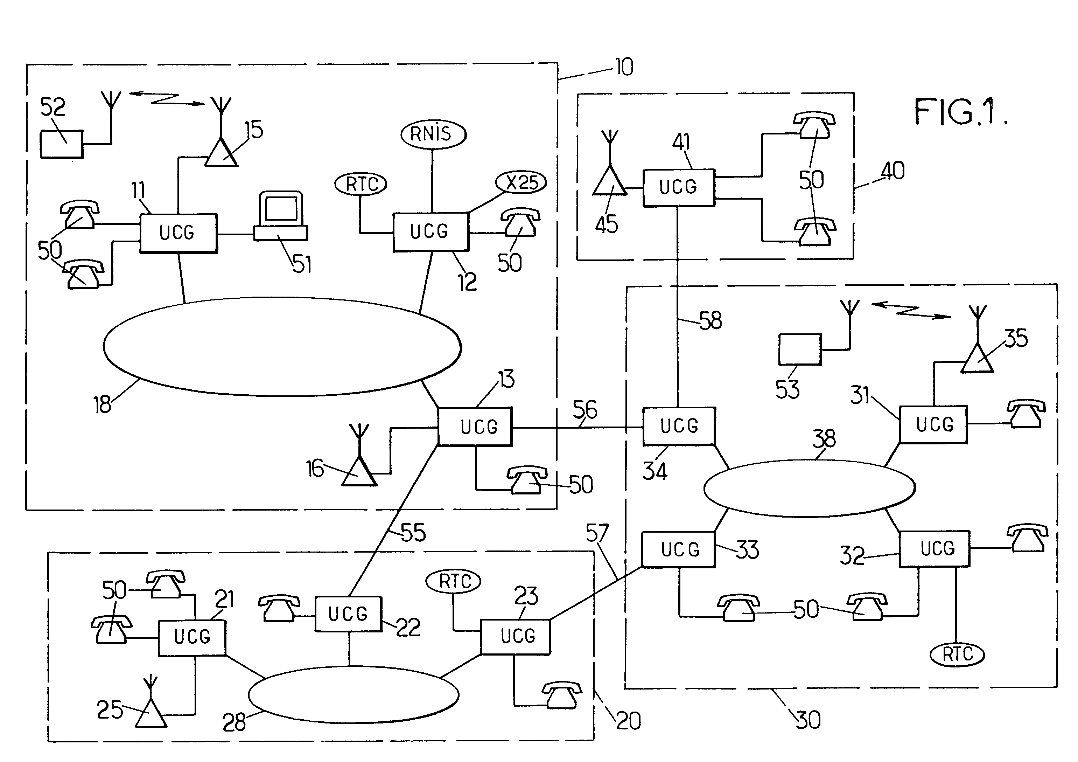

La figure 1 montre, à titre illustratif, un exemple de système d'autocommutation construit à partir de quatre autocommutateurs (PABX) 10, 20, 30, 40. Chaque autocommutateur a une organisation en grappes. Il comprend ainsi une ou plusieurs unités de contrôle de grappe (UCG) 11, 12, 13, 21, 22, 23, 31, 32, 33, 34, 41 comportant chacune un ensemble de points d'accès au système. Les points d'accès peuvent servir d'interface avec différents types de lignes, selon les compatibilités désirées du système. On peut notamment prévoir des points d'accès pour le raccordement de terminaux de téléphonie analogique 50 (terminaux S63 simples ou terminaux "intelligents"), de terminaux numériques 51 pour réseaux X25 ou à intégration de services... Pour les communications extérieures, certaines au moins des UCG ont des points d'accès reliés par exemple à des lignes du réseau téléphonique public commuté (RTC), d'un réseau numérique à intégration de services (RNIS) et/ou d'un réseau numérique à commutation de paquets (X25). Pour permettre des communications avec des terminaux mobiles 52, 53, certaines des UCG comportent des points d'accès radio respectivement reliés à des bornes radio 15, 16, 25, 35, 45. Les communications radio entre les bornes et les terminaux mobiles s'effectuent par exemple selon les normes CT2 ou DECT.

Chaque UCG possède des ressources suffisantes pour supporter les communications entre ses propres points d'accès.

Chaque autocommutateur 10, 20, 30 comportant plusieurs UCG est équipé d'une boucle de transport 18, 28, 38, permettant les échanges inter-UCG de manière à supporter les communications entre plusieurs points d'accès appartenant à cet autocommutateur. A titre d'exemple, la boucle 18, 28, 38 peut être une ligne numérique à 40 Mbits/s organisée en temps partagé pour supporter 512 canaux à commutation de circuits (ci-après appelés "canaux circuits") et 70 canaux à commutation de paquets (ci-après appelés "canaux paquets"). Les canaux circuits sont prévus pour les points d'accès dont le fonctionnement requiert la réservation d'une ressource circuit, tandis que les canaux paquets sont prévus pour les points d'accès utilisés par des communications à commutation de paquets et pour les échanges de commandes propres au système d'autocommutation (notamment les fonctions de signalisation). Des unités de contrôle non représentées sont prévues dans les autocommutateurs 10, 20, 30 pour superviser le fonctionnement des boucles de transport 18, 28, 38.

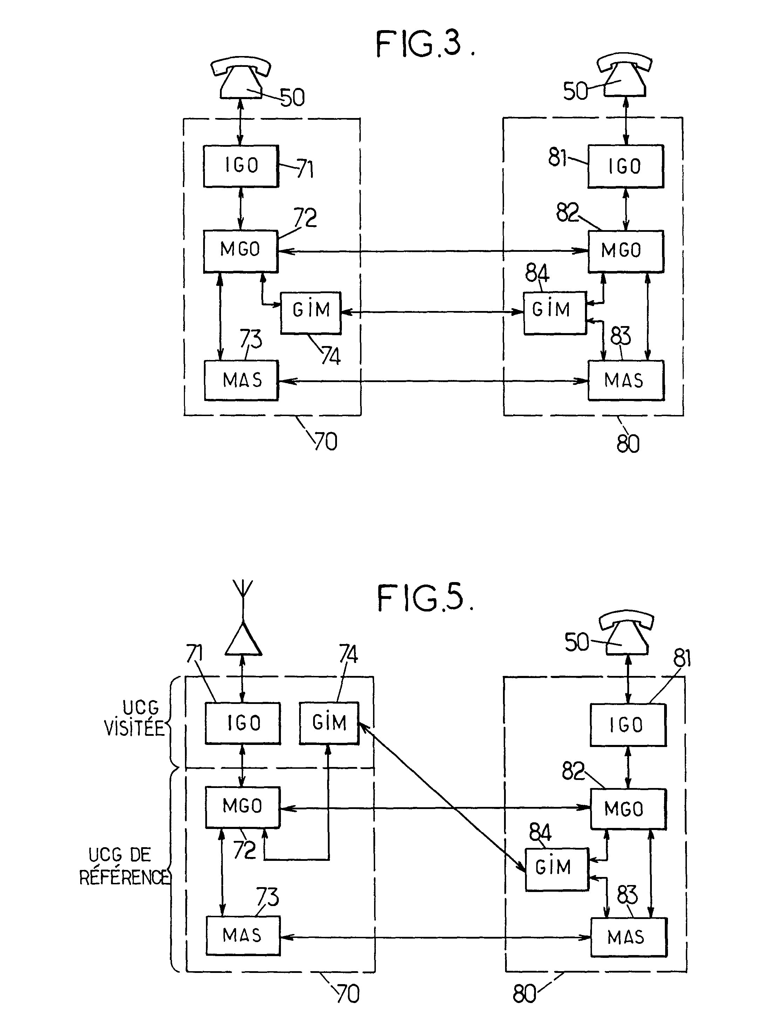

Lorsque le système comporte plusieurs autocommutateurs, des lignes inter-PABX 55-58 (par exemple des lignes MIC) sont prévues entre des UCG passerelles 13, 22, 23, 33, 34, 41 des différents autocommutateurs. Ces lignes peuvent être privées (par exemple dans le cas de deux autocommutateurs situés sur un même site géographique) ou louées à un opérateur public dans le cas d'un système multisite. De préférence, les UCG passerelles sont agencées pour transmettre de manière transparente la signalisation et le trafic sur les lignes inter-PABX 55-58. Dans le cas par exemple d'une communication téléphonique entre un point d'accès de l'UCG 11 et un point d'accès de l'UCG 21 dans la configuration de la figure 3, un message de signalisation initiale émis par exemple par l'UCG 11 peut être inséré dans un canal paquets de la boucle 18, détecté par l'UCG passerelle 13 et transmis par celle-ci de façon transparente à l'UCG passerelle 22 par la ligne 55. L'UCG 22 insère ce message dans un canal paquets de la boucle 28, et l'UCG concernée 21 détecte l'appel qui lui est destiné et peut alors échanger des messages avec l'UCG 11 le long du chemin de signalisation 18, 55, 28 ainsi créé pour chercher à obtenir l'allocation des ressources circuit nécessaires au transport des signaux de phonie. Les ressources circuit qui seront allouées à la communication sont a priori indépendantes du chemin de signalisation utilisé. Dans l'exemple précédent, si une bande passante suffisante n'est pas disponible sur la ligne 55 pour transporter les signaux de phonie, ceux-ci pourront passer, par exemple, par l'autocommutateur 30 : la procédure de réservation de circuit pourra conduire, après détection de cette indisponibilité, à réserver un canal circuit sur la boucle 28 entre les UCG 21 et 23, un canal sur la ligne 57, un canal circuit sur la boucle 38 entre les UCG passerelles 33 et 34, un canal sur la ligne 56 et un canal circuit sur la boucle 18 entre les UCG 13 et 11.

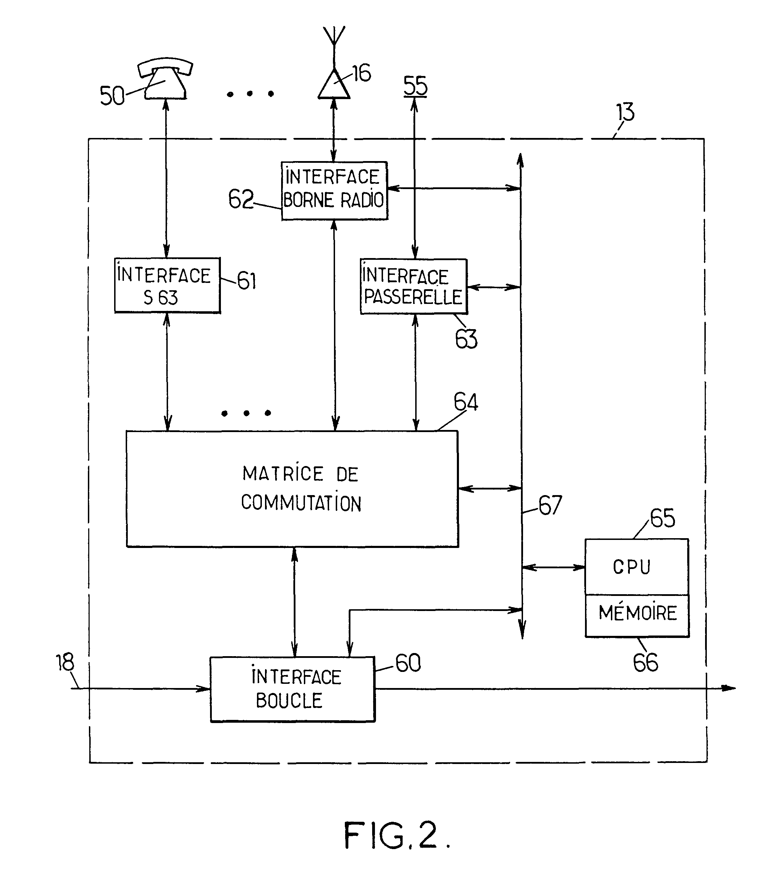

La figure 2 est un schéma de principe d'une UCG 13 ayant par exemple des points d'accès pour terminaux analogiques 50, un ou plusieurs points d'accès radio pour le raccordement de bornes 16 et un ou plusieurs points d'accès passerelles pour le raccordement de lignes inter-PABX 55. L'UCG 13 comporte une interface 60 avec la boucle de transport 18 de l'autocommutateur, consistant par exemple en des répéteurs pour retransmettre les trames circulant sur la boucle 18, associés à un automate de séparation des canaux paquets et des canaux circuits et à des mémoires tampon pour l'extraction et l'insertion des signaux concernant l'UCG. Chaque point d'accès de l'UCG consiste en une interface physique 61, 62, 63. Chaque interface 61, 62, 63 assure les fonctions physiques de signalisation (détection d'événements, commandes ...) et de traduction nécessaires à la compatibilité des organes raccordés aux points d'accès avec les formats utilisés dans le système d'autocommutation.

Les différentes interfaces 60-63 sont reliées à une matrice de commutation 64 qui assure le routage des signaux.

Le fonctionnement de l'UCG 13 est contrôlé par un processeur 65 associé à une mémoire 66. Le processeur 65 pilote les interfaces 60-63 par l'intermédiaire de son bus 67 soit directement (interfaces 60, 62, 63 dans l'exemple de la figure 2) soit à travers la matrice de commutation 64 (interfaces 61). Le processeur 65 assure notamment les traitements de signalisation concernant les points d'accès de l'UCG : il est informé des événements détectés par les interfaces 60-63 et effectue les traitements appropriés pour configurer la matrice de commutation 64, adresser des messages de signalisation vers l'interface 60 et des commandes aux interfaces physiques 61-63.

Pour l'interface avec la boucle de transport de l'autocommutateur, le processeur 65 dispose de deux utilitaires logiciels : le GIC (Gestionnaire d'Inter Communications) qui gère les canaux paquets et le GIM (Gestionnaire d'Intervalle de temps Multisite) qui gère les canaux circuits. Pour l'émission et la réception de ses messages, le traitement d'appel s'adresse au GIC sous forme de primitives. Par le choix d'un message dirigé ou d'un message diffusé, il est possible de s'adresser à une UCG ou à toutes les UCG d'un autocommutateur. En liaison avec le système opérationnel, le GIC gère l'acheminement des messages. Pour la prise/libération et la connexion/déconnexion du chemin phonique, le traitement d'appel s'adresse au GIM également sous forme de primitives. Lorsqu'il s'agit de réserver un chemin, les utilitaires GIM des deux demi-appels dialoguent directement entre eux.

Différents types de modules logiciels sont utilisés par le processeur 65 pour effectuer les traitements de signalisation. Un demi-appel concernant un terminal comporte ainsi la création des tâches suivantes :
- le GO (Gestionnaire d'Organe) jouant le rôle de contrôleur du terminal, subdivisé en un MGO et un IGO. Le MGO (Moniteur de Gestion d'Organe) réalise de façon plus particulière les fonctions d'interface avec le niveau supérieur (niveau MAS), tandis que l'IGO (Interface de Gestion d'Organe) tient compte des détails spécifiques à chaque type de terminal. Le GO détecte les événements élémentaires produits par le terminal, les traite et les traduit en événements téléphoniques transmis au MAS par des messages conformes au standard de la signalisation interne du système. Il répercute vers le terminal les commandes exprimées par le MAS dans des messages conformes au standard de la signalisation interne du système.
- le Moniteur d'Appel Simple (MAS) qui réalise toutes les fonctions d'analyse et de décision (routage d'appel, demande de faculté,...) intervenant dans la gestion d'appel. Pour ces fonctions, le MAS consulte des tables stockées dans la mémoire 66 et définissant notamment les droits de l'utilisateur et les facultés accessibles par le terminal. Le MAS pilote le Gestionnaire d'Organe.

Le gestionnaire d'organe est adapté au type d'organe qu'il contrôle, le MAS est indépendant du type d'organe. Cette indépendance est préservée par l'interface MAS/MGO dont les formats sont standardisés au sein du système. Le MGO est commun à une famille d'applicatifs alors que l'IGO est plus spécifique. Par exemple, on peut prévoir, pour les communications radio, un module MGO unique et plusieurs types de mobiles IGO, par exemple un IGO pour le cas CT2 et un IGO pour le cas DECT.

En référence à la figure 3, l'établissement d'un appel typique mettant en jeu deux terminaux fixes 50 s'effectue en exécutant les étapes successives suivantes :
*Demi-appel d'origine (70) :*
   - création des tâches IGO 71 et MGO 72 à l'initialisation de l'appel. Le MGO crée à son tour une tâche MAS 73,
   - le MAS pilote le MGO pour recueillir les informations de présélection et de sélection,
   - le MAS interprète les informations de présélection et accomplit les fonctions de routage en émettant un message d'Etablissement, ce message étant diffusé dans le cas d'un appel interne à l'autocommutateur, ou dirigé, dans le cas d'un appel extérieur, vers la ou les UCG susceptibles de fournir un faisceau de sortie.
*Demi-appel destination (80) :*
   - le message d'Etablissement émis par le MAS 73 du demi-appel origine crée le MAS 83 du demi-appel destination dans l'UCG destinataire,
   - dans ce demi-appel, le MAS 83 crée à son tour le MGO 82 destiné à contrôler l'extrémité destinataire (terminal d'usager ou joncteur de sortie),
   - muni des adresses des deux extrémités, le MAS 83 adresse à son GIM 84 une requête d'établissement du chemin phonique. Le GIM 84 dialogue avec son homologue 74 du demi-appel origine pour accomplir la requête,
   - le MAS 83 envoie à son homologue du demi-appel origine, l'identité du circuit choisi intra-UCG ou inter-UCG (message Alerte),
   - à la réponse, les deux MGO (sous contrôle des MAS) adressent à leurs GIM respectifs une requête de connexion,
   - une fois la communication établie, les deux MAS 73, 83 se retirent et la communication est supervisée par les deux MGO 72, 82 en vis-à-vis.

Les traitements de signalisation expliqués ci-dessus sont également appliqués pour l'établissement des communications mettant en jeu un ou plusieurs terminaux mobiles. Chaque terminal mobile est associé à une UCG de référence respective où sont stockées les tables définissant notamment les droits d'accès de ce terminal.

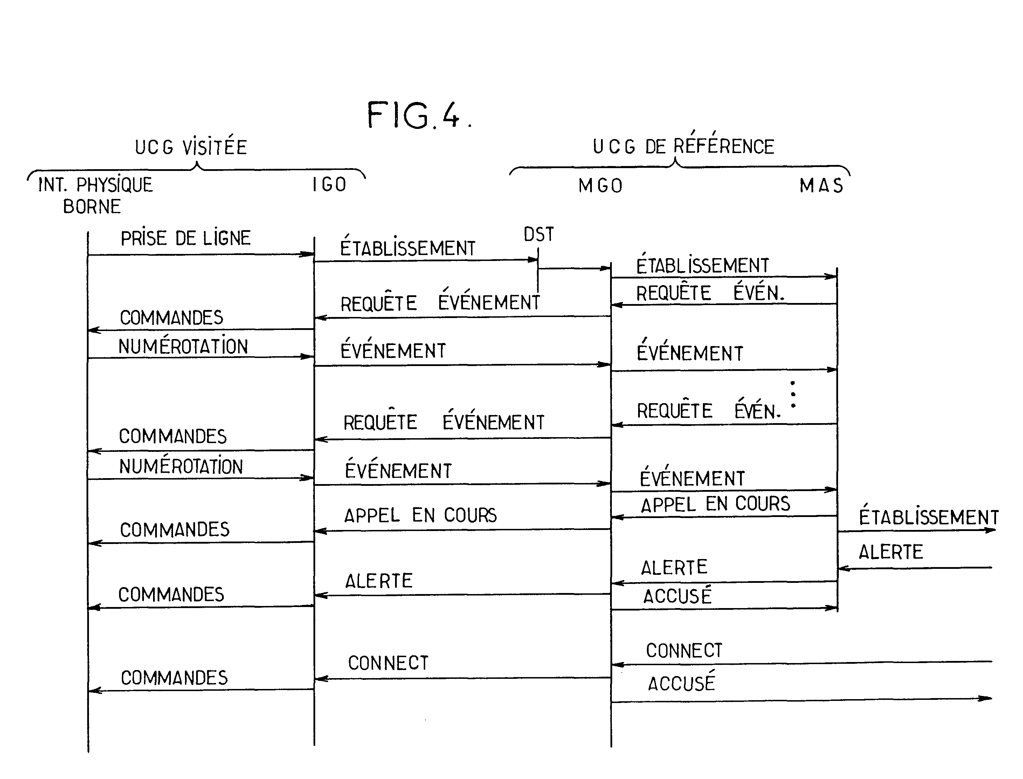

La figure 4 illustre le déroulement d'un demi-appel origine depuis un terminal mobile en liaison avec une borne radio reliée à une UCG visitée différente de son UCG de référence. La tâche IGO est exécutée dans l'UCG visitée, tandis que les tâches MGO et MAS sont exécutées dans l'UCG de référence associée au terminal. Lorsque l'interface physique de la borne radio détecte la prise de ligne par le terminal, une tâche IGO est créée dans l'UCG visitée. L'IGO diffuse alors un message d'établissement incluant une identité du terminal mobile constituée par son numéro dans le plan de numérotation propre aux liaisons radio. Ceci évite que toutes les UCG équipées de bornes radio aient besoin de stocker des tables de correspondance entre les numéros dans le plan radio et les numéros dans le plan privé à l'égard de tous les terminaux mobiles. Chaque UCG possède un utilitaire, appelé DST, pour surveiller les messages diffusés sur les boucles de transport des autocommutateurs et prendre les mesures nécessaires lorsque ces messages concernent l'UCG en question. Ainsi, les UCG autres que l'UCG de référence ignorent le message d'établissement diffusé par l'IGO, tandis que l'utilitaire DST de l'UCG de référence, après avoir détecté que le terminal mobile demandeur est associé à cette UCG, crée une tâche MGO. Le DST traduit en outre l'identité du terminal pour fournir le numéro du terminal dans le plan de numérotation privé du système d'autocommutation, la table de correspondance plan radio/plan privé ayant seulement besoin d'être stockée dans l'UCG de référence du terminal.

La tâche MGO créée dans l'UCG de référence crée à son tour une tâche MAS en lui fournissant un message d'établissement traduit selon les formats standards de l'interface MGO/MAS. Le MAS pilote alors le demi-appel en transmettant au MGO, qui les traduit pour l'IGO, des messages de requête d'événement pour recueillir la numérotation composée sur le terminal mobile. L'IGO adresse des commandes à l'interface physique de la borne pour produire des tonalités ou des affichages appropriés au niveau du terminal. Une fois que le MAS a recueilli tous les messages d'événement dont il a besoin pour définir la requête formulée par le terminal, il indique au MGO et, de là, à l'IGO que le traitement de l'appel est en cours. L'IGO commande alors la borne pour produire les tonalités et affichages appropriés. Le MAS examine la requête, en consultant les tables relatives au terminal mobile. S'il est décidé de donner suite à la requête, le MAS émet un message d'établissement à destination de l'UCG comportant le point d'accès demandé (autre terminal fixe ou mobile, joncteur de sortie ...) en identifiant dans ce message l'identité (dans le plan de numérotation radio) du terminal demandeur, l'adresse du point d'accès radio ou de l'UCG visitée d'où émane l'appel et l'identité (dans le plan de numérotation privé) du point d'accès destinataire. A réception depuis le MAS destinataire du message d'alerte identifiant les ressources circuit à employer, le MAS de l'UCG de référence transmet le message d'alerte au MGO, et se retire après avoir reçu un message d'accusé de réception de la part du MGO. Le message d'alerte, convenablement traduit par le MGO, est adressé à l'IGO dans l'UCG visitée, l'IGO produisant alors les commandes appropriées (par exemple tonalité de sonnerie du poste appelé) au terminal mobile. Le MAS s'étant retiré, le MGO dialogue directement avec son homologue de l'autre demi-appel. Il reçoit un message "connect" après décrochage du poste appelé, puis adresse une requête de connexion au GIM de l'UCG visitée. Le message "connect" est transmis à l'IGO pour que celle-ci prévienne le terminal demandeur et commande la matrice de commutation de l'UCG visitée afin qu'elle assure la connexion physique du circuit réservé. Le MGO de l'UCG de référence confirme à son homologue que la communication peut commencer dans un message d'accusé de réception.

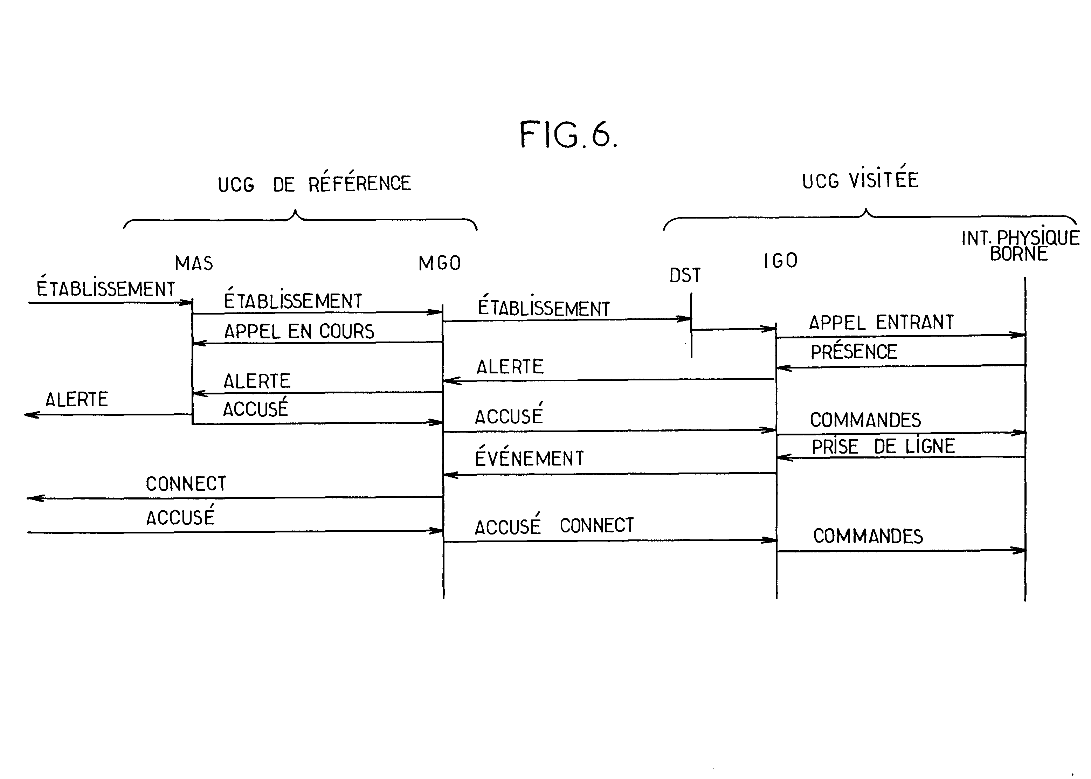

Comme le montre la figure 5 dans le cas d'un appel destiné à un terminal fixe, l'utilitaire GIM impliqué par le demi-appel origine est celui de l'UCG visitée, qui est identifiée dans le message d'établissement ayant crée le MAS du demi-appel destinataire. Le chemin de phonie sélectionné entre l'UCG visitée et l'UCG destinataire est donc indépendant du chemin de signalisation passant par l'UCG de référence.

La figure 6 est un diagramme correspondant à celui de la figure 4 dans le cas d'un appel destiné à un terminal mobile en liaison avec une borne radio reliée à une UCG visitée différente de son UCG de référence. La réception du message d'établissement depuis le MAS du demi-appel origine crée une tâche MAS dans l'UCG de référence. Cette tâche MAS crée à son tour une tâche MGO dans l'UCG de référence, à condition que le terminal mobile n'ait pas activé un service tel qu'un renvoi d'appel ou un non-dérangement, ce que les traitements d'appel effectués par le MAS permettent de vérifier par consultation des tables concernant le terminal destinataire identifié dans le message d'établissement. Le MGO confirme au MAS, dans un message d'appel en cours, qu'il recherche le terminal mobile, et il transmet le message d'établissement, convenablement traduit, à l'UCG visitée selon un processus qui sera détaillé plus loin. Le message d'établissement est reçu par le MAS et transmis au MGO avec l'identité du terminal dans le plan privé du système d'autocommutation (format standard des MAS), et le MGO transmet le message d'établissement à l'UCG visitée avec l'identité du terminal dans le plan radio puisque les correspondances plan privé/plan radio ne sont pas toutes connues dans les UCG équipées de bornes radio. Dans l'UCG visitée, la réception du message d'établissement crée une tâche IGO qui indique l'appel entrant à l'interface physique de la borne radio concernée (ou aux interfaces physiques de toutes les bornes radio dépendant de l'UCG visitée). Une fois que la borne radio a détecté la présence du terminal mobile dans sa zone de couverture, l'IGO alerte le MGO de l'UCG de référence, qui alerte à son tour le MAS. Le MAS adresse alors au GIM de l'UCG visitée (par exemple par l'intermédiaire du GIM de l'UCG de référence) une requête d'établissement du chemin de phonie indiquant l'identité du terminal demandeur et l'adresse du point d'accès d'où émane l'appel, qu'il a reçues dans le message d'établissement initial.

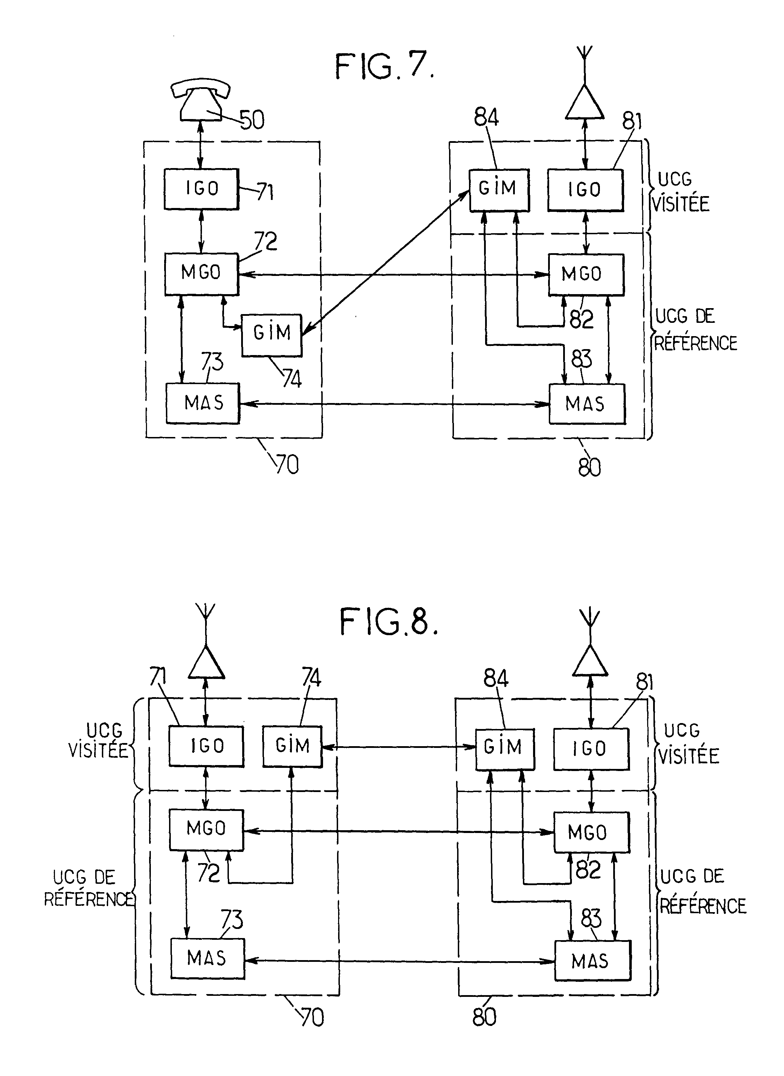

Comme l'illustre la figure 7 dans le cas où l'appel émane d'un terminal fixe, le GIM de l'UCG visitée dialogue avec son homologue du demi-appel origine pour obtenir la réservation des ressources circuit nécessaires, qui ne passent pas obligatoirement par l'UCG de référence. Une fois que les ressources circuit ont été réservées, le GIM de l'UCG visitée prévient le MAS de l'UCG de référence. Celui-ci adresse alors à son homologue du demi-appel origine un message d'alerte identifiant les circuits réservés. Le MAS de l'UCG de référence se retire alors après avoir adressé un message d'accusé de réception au MGO. Le MGO transmet le message d'accusé de réception à l'IGO de l'UCG visitée pour que celle-ci adresse à l'interface physique de la borne radio les commandes propres à faire sonner et/ou à afficher des messages appropriés sur le terminal appelé.

Une fois que l'interface physique de la borne radio a détecté le décrochage du terminal appelé, l'IGO de l'UCG visitée adresse un message d'événement au MGO de l'UCG de référence, qui adresse alors le message "connect" à son homologue du demi-appel origine. Le MGO de l'UCG de référence adresse sa requête de connexion au GIM de l'UCG visitée (par exemple par l'intermédiaire du GIM de l'UCG de référence). Une fois cette requête honorée et après réception du message d'accusé du demi-appel origine, le MGO transmet un message "accusé connect" à l'IGO pour que celle-ci prévienne le terminal appelé et commande la matrice de commutation de l'UCG visitée afin qu'elle assure la connexion physique du circuit réservé.

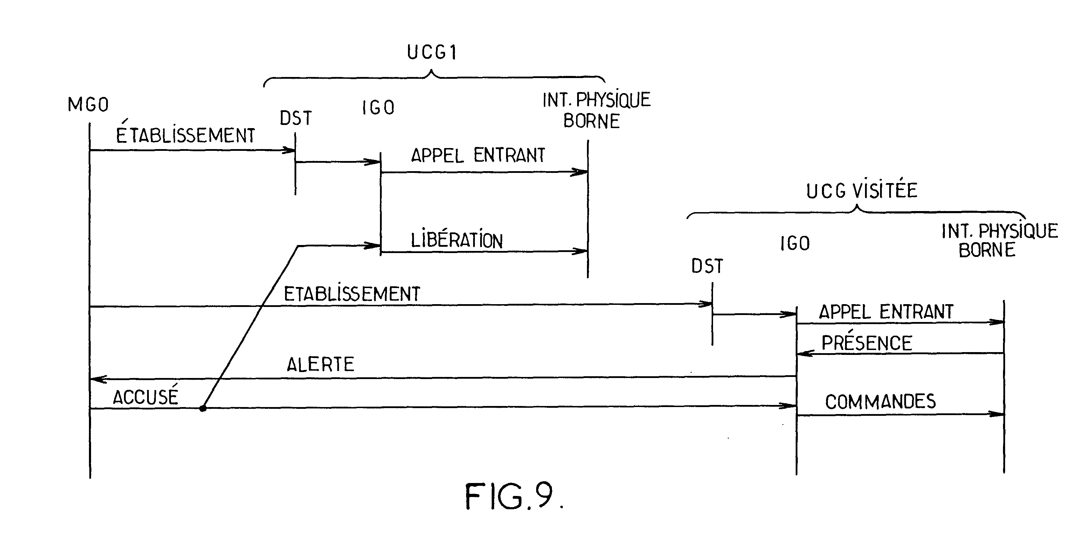

Dans le cas d'une communication entre deux terminaux mobiles en liaison avec des bornes radio reliées à des UCG visitées distinctes de leurs UCG de référence respectives, l'établissement de l'appel s'effectue par dialogue entre les deux demi-appels qui ont été décrits en référence aux figures 4 et 6. Ce cas est illustré par la figure 8.

L'acheminement d'un appel vers un terminal mobile nécessite que des mesures soient prévues pour localiser les terminaux mobiles au sein du système, c'est-à-dire pour identifier les UCG qui comportent les points d'accès radio fournissant de bonnes liaisons avec les terminaux mobiles. L'invention prévoit ainsi deux procédures de localisation mises en oeuvre l'une périodiquement et l'autre lors de l'établissement d'un appel destiné à un terminal mobile.

Chaque UCG constituant l'UCG de référence d'au moins un terminal mobile stocke une table de localisation indiquant, pour chaque terminal mobile qui lui est associé et qui se trouve en liaison avec une borne radio, une cellule de localisation consistant en une ou plusieurs UCG équipées de bornes radio et incluant au moins l'UCG comportant le point d'accès radio auquel est reliée cette borne radio.

Lors de l'établissement d'un appel destiné à un terminal mobile, le message d'établissement produit par le MGO de l'UCG de référence (figure 6) est en fait diffusé vers toutes les UCG comportant au moins un point d'accès radio, et ce message inclut outre l'identité dans le plan radio du terminal appelé, une identité d'une zone de recherche du terminal. Cette zone de recherche correspond à la cellule de localisation indiquée dans la table de localisation du terminal appelé. L'utilitaire DST de chaque UCG traite le message d'établissement pour ne créer la tâche IGO que si la cellule correspondant à la zone de recherche identifiée couvre l'UCG en question. Une tâche IGO commande les points d'accès radio de chaque UCG de la cellule de localisation indiquée pour rechercher le terminal. Dans certains systèmes radio (notamment selon la norme CT2) la recherche d'un terminal mobile est à l'initiative des bornes : les points d'accès radio sont alors commandés par l'IGO pour initier la recherche (paging) du terminal par envoi des interrogations appropriées sur le canal radio. Dans d'autres systèmes (notamment selon la norme DECT), ce sont les terminaux qui s'identifient auprès des bornes qui les desservent. Dans ce dernier cas la recherche commandée par l'IGO consiste pour les bornes à déterminer si le terminal appelé figure dans les listes des terminaux qu'elles desservent.

Dans le cas illustré par la figure 6, le terminal mobile répond à la recherche exécutée depuis l'UCG visitée qui est incluse dans sa cellule de localisation. L'IGO de l'UCG visitée adresse alors un message d'alerte positif au MGO. Le message d'accusé retourné par le MGO est également diffusé, et il inclut l'identité de la cellule de localisation du terminal mobile. Le cas échéant, les tâches IGO en cours dans les UCG de la cellule de localisation autres que l'UCG visitée se retirent à réception de ce message d'accusé.

Dans le cas illustré par la figure 9, le terminal mobile ne répond pas à la recherche exécutée dans la ou les UCG1 incluses dans la cellule de localisation indiquée dans sa table de localisation. Après une temporisation, par exemple de 3 secondes, le MGO diffuse de nouveau le message d'établissement avec l'identité du terminal appelé, mais en identifiant cette fois une zone de recherche correspondant à une ou plusieurs cellules différentes de la cellule de localisation indiquée dans la table de localisation. Ces cellules incluent elles-mêmes une ou plusieurs UCG. Les cellules de la nouvelle zone de recherche sont déterminées par le MGO dans l'UCG de référence en consultant une table de voisinage préenregistrée donnant, pour chaque cellule, une liste de la ou des cellules les plus susceptibles de procurer une liaison radio dans le cas d'un petit déplacement du terminal. L'utilitaire DST de chaque UCG recevant ce nouveau message d'établissement détermine si cette UCG fait partie d'une des cellules de la zone de recherche identifiée, et crée une tâche IGO dans l'affirmative. Dans le cas illustré par la figure 9, l'UCG visitée reçoit le second message d'établissement, et la tâche IGO adresse un message d'alerte positif au MGO après détection de la présence physique du terminal à portée d'un des points d'accès de l'UCG visitée. Ce message d'alerte identifie la cellule de l'UCG visitée et le point d'accès radio procurant la liaison (ou la meilleure liaison) avec le terminal. Le MGO met à jour la table de localisation à l'égard du terminal appelé dans l'UCG de référence sur la base de l'identité de la cellule désignée dans le message d'alerte positif. Le message d'accusé de réception produit par le MGO après le retrait du MAS est également diffusé. Comme dans le cas de la figure 6, l'IGO de l'UCG visitée adresse les commandes appropriées au point d'accès radio procurant le liaison avec le terminal. Les autres tâches IGO créées par le premier ou le second message d'établissement se retirent après avoir reçu le message d'accusé de réception et après avoir libéré les bornes radio vis-à-vis de la recherche du terminal appelé.

Si la diffusion du second message d'établissement par le MGO n'est suivie par la réception d'aucun message d'alerte positif, le MGO peut après une autre temporisation, par exemple de 3 secondes, diffuser une nouvelle fois le message d'établissement, mais sans spécifier une zone de recherche. Toutes les UCG pourvues de bornes radio sont alors concernées et exécutent une procédure de recherche comme expliqué précédemment. Si de nouveau aucun message d'alerte positif n'est reçu par le MGO, celui-ci en informe le MAS qui prévient à son tour le MAS du demi-appel origine que le terminal appelé n'est pas joignable.

On notera que les temporisations évoquées pourraient être effectuées par les tâches IGO, avec remontée d'un message d'alerte négatif vers le MGO si la recherche exécutée sous le contrôle d'une IGO échoue pendant la période de temporisation.

Bien entendu, une table de localisation peut également être mise à jour à l'égard d'un terminal mobile lorsque ce terminal demande l'établissement d'une communication de la manière expliquée en référence à la figure 4.

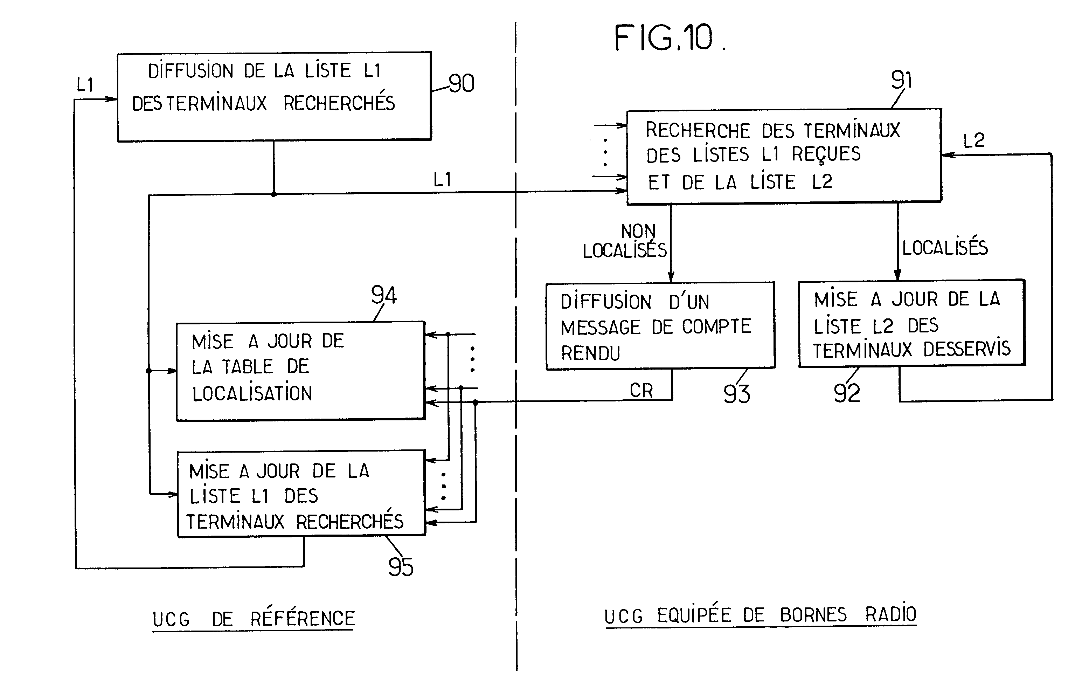

La procédure périodique de localisation procède par cycles successifs effectués par exemple toutes les 3 minutes. Un tel cycle est illustré par la figure 10.

Chaque UCG constituant l'UCG de référence d'au moins un terminal mobile mémorise, en plus de sa table de localisation, une liste L1 d'identités, dans le plan radio, de terminaux mobiles recherchés. Parallèlement chaque UCG équipée d'au moins une borne radio mémorise une liste L2 d'identités, dans le plan radio, des terminaux mobiles qu'elle dessert.

Au début de chaque cycle de localisation, les UCG de référence diffusent leurs listes L1 respectives à destination des UCG équipées de bornes radio (étape 90).

Après avoir reçu les listes L1 ainsi diffusées, chaque UCG commande ses points d'accès radio pour rechercher les terminaux identifiés dans ces listes L1 et dans la liste L2 mémorisée par cette UCG (étape 91). Lorsque les bornes radio ont rendu compte à l'UCG des résultats de la recherche 91, l'UCG procède à la mise à jour 92 de sa liste L2 pour le cycle suivant. La liste L2 mise à jour se compose des identités des terminaux qui ont été localisés à l'étape 91. L'UCG équipée de bornes radio diffuse en outre un message de compte rendu CR à destination des UCG de référence. Ce message CR contient une identité de la cellule à laquelle appartient l'UCG qui le diffuse et la liste des identités des terminaux mobiles que cette UCG n'a pas pu localiser à l'étape 91.

Chaque UCG de référence reçoit les messages de compte rendu issus des UCG équipées de bornes radio, et les filtre pour ne tenir compte que des identités des terminaux qui lui sont associés. Sur la base des messages CR filtrés et de la liste L1 qu'elle a diffusée en début de cycle, l'UCG de référence met à jour sa table de localisation (étape 94) et sa liste L1 pour le cycle suivant (étape 95).

A l'étape 94, la table de localisation de l'UCG de référence est mise à jour à l'égard de chaque terminal identifié dans la liste L1 qu'elle a diffusée en début de cycle et non identifié dans l'un des messages de compte rendu, en indiquant pour ce terminal la cellule identifiée dans ledit message de compte rendu. Les autres entrées de la table de localisation restent inchangées.

A l'étape 95, l'UCG de référence supprime de la liste L1 les identités de ses terminaux associés pour lesquels la table de localisation est modifiée à l'étape 94. L'UCG de référence ajoute dans la liste L1 les identités de ses terminaux associés qui, sans faire partie de la liste L1 qu'elle a diffusée en début de cycle, figurent dans l'un des messages de compte rendu.

## Revendications

1. Procédé de gestion de signalisation dans un système d'autocommutation comprenant plusieurs unités de contrôle de grappe (11-13, 21-23, 31-34, 41) fournissant chacune des points d'accès au système, des bornes radio (15, 16, 25, 35, 45) étant prévues pour procurer des liaisons radio avec des terminaux mobiles (52, 53) et étant reliées chacune à un point d'accès radio d'une unité de contrôle de grappe respective, les terminaux mobiles étant respectivement associés à des unités de contrôle de grappe de référence, procédé dans lequel les traitements de signalisation concernant l'établissement d'une communication à travers un point d'accès comprennent, à l'égard de ce point d'accès, d'une part des tâches de contrôle du point d'accès (MGO, IGO) pour traduire en messages de signalisation du système des événements issus du point d'accès et adresser des commandes au point d'accès, et d'autre part des tâches de gestion d'appel (MAS) pour traiter des requêtes concernant le point d'accès et superviser les tâches de contrôle du point d'accès lors de l'établissement de la communication,dans lequel
pour l'établissement d'une communication avec un terminal mobile en liaison avec une borne radio reliée à un point d'accès radio d'une unité de contrôle de grappe visitée différente de l'unité de contrôle de grappe de référence associée audit terminal mobile, les tâches de gestion d'appel relatives audit point d'accès radio sont exécutées dans l'unité de contrôle de grappe de référence et une partie au moins des tâches de contrôle du point d'accès radio est exécutée dans ladite unité de contrôle de grappe visitée, le chemin de trafic établi dans le système d'autocommutation entre le point d'accès radio et un second point d'accès pour supporter la communication étant choisi indépendamment du chemin de signalisation utilisé pour échanger des messages de signalisation propres au système d'autocommutation entre l'unité de contrôle de grappe visitée, l'unité de contrôle de grappe de référence et l'unité de contrôle de grappe dont relève ledit second point d'accès,
**caractérisé en ce que** lors de l'établissement d'une communication initiée par un terminal mobile en liaison avec une borne radio reliée à un point d'accès radio d'une unité de contrôle de grappe visitée différente de l'unité de contrôle de grappe de référence associée audit terminal mobile, les tâches de contrôle de point d'accès exécutées dans ladite unité de contrôle de grappe visitée comprennent la diffusion vers plusieurs unités de contrôle de grappe d'un message d'établissement incluant une identité dudit terminal mobile, et **en ce que** chaque unité de contrôle de grappe recevant ledit message d'établissement détermine si elle est l'unité de contrôle de grappe de référence associée audit terminal mobile et, dans l'affirmative, initie une tâche de gestion d'appel (MAS) relative audit point d'accès radio.

2. Procédé selon la revendication 1, **caractérisé en ce que** lors de l'établissement d'une communication à destination d'un terminal mobile relié par l'intermédiaire d'une borne radio à un point d'accès radio d'une unité de contrôle de grappe visitée différente de l'unité de contrôle de grappe de référence associée audit terminal mobile, les tâches de contrôle du point d'accès radio comprennent :
- au niveau de l'unité de contrôle de grappe de référence associée au terminal mobile, l'émission d'un message d'établissement incluant une identité du terminal mobile à destination d'une ou plusieurs unités de contrôle de grappe reliées à des bornes radio ;
- au niveau d'au moins une unité de contrôle de grappe ayant reçu ledit message d'établissement, la commande d'au moins un point d'accès radio pour rechercher le terminal mobile ; et
- au niveau de ladite unité de contrôle de grappe visitée, si celle-ci a reçu ledit message d'établissement, l'émission d'un message d'alerte positif vers l'unité de contrôle de grappe de référence, l'unité de contrôle de grappe visitée et l'unité de contrôle de grappe de référence échangeant ensuite des messages de signalisation pour l'établissement de la communication.

3. Procédé selon l'une quelconque des revendications 1 à 2, **caractérisé en ce que** les unités de contrôle de grappe équipées de bornes radio sont réparties en cellules, et **en ce qu'**il est prévu une procédure périodique de localisation pour tenir à jour, dans chaque unité de contrôle de grappe de référence, une table de localisation indiquant, pour chaque terminal mobile associé à ladite unité de contrôle de grappe de référence et se trouvant en liaison avec une borne radio, une cellule de localisation incluant au moins l'unité de contrôle de grappe comportant le point d'accès radio auquel est reliée ladite borne radio.

4. Procédé selon les revendications 2 et 3, **caractérisé en ce que** lors de l'établissement d'une communication à destination d'un terminal mobile relié par l'intermédiaire d'une borne radio à un point d'accès radio d'une unité de contrôle de grappe visitée, l'étape d'émission du message d'établissement par l'unité de contrôle de grappe de référence associée au terminal mobile comprend :
- l'émission d'un message d'établissement incluant une identité du terminal mobile à destination de chaque unité de contrôle de grappe de la cellule de localisation indiquée pour ledit terminal mobile dans la table de localisation stockée dans l'unité de contrôle de grappe de référence ; et
- si aucun message d'alerte positif n'est reçu par l'unité de contrôle de grappe de référence depuis la ou les unités de contrôle de grappe de ladite cellule de localisation indiquée, la diffusion par l'unité de contrôle de grappe de référence d'un message d'établissement incluant l'identité du terminal et une identité d'une zone de recherche correspondant à un ensemble d'unités de contrôle de grappe équipées de points d'accès radio, ladite zone de recherche étant déterminée en fonction de ladite cellule de localisation indiquée par consultation d'une table de voisinage mémorisée dans l'unité de contrôle de grappe de référence.

5. Procédé selon la revendication 4, **caractérisé en ce que**, si aucun message d'alerte positif n'est reçu par l'unité de contrôle de grappe de référence depuis la ou les unités de contrôle de grappe de ladite cellule de localisation indiquée et les unités de contrôle de grappe de l'ensemble correspondant à ladite zone de recherche, l'unité de contrôle de grappe de référence diffuse un message d'établissement incluant l'identité du terminal mobile à destination de chaque unité de contrôle de grappe comportant au moins un point d'accès radio.

6. Procédé selon l'une quelconque des revendications 3 à 5, **caractérisé en ce que** chaque unité de contrôle de grappe comportant au moins un point d'accès radio stocke une liste d'identités de terminaux mobiles desservis, et **en ce que** la procédure périodique de localisation comprend des cycles de localisation successifs comportant chacun les étapes suivantes :
- la diffusion (90) par chaque unité de contrôle de grappe de référence d'une liste d'identités de terminaux mobiles recherchés à destination de chaque unité de contrôle de grappe comportant au moins un point d'accès radio ;
- la recherche (91) par chaque unité de contrôle de grappe comportant au moins un point d'accès radio des terminaux identifiés dans sa liste d'identités de terminaux mobiles desservis et des terminaux identifiés dans chaque liste d'identités de terminaux mobiles recherchés reçue d'une unité de contrôle de grappe de référence ;
- la mise à jour (92) de la liste des identités de terminaux mobiles desservis par chaque unité de contrôle de grappe comportant au moins un point d'accès radio avec les identités des terminaux mobiles localisés. à l'étape de recherche exécutée par ladite unité de contrôle de grappe comportant au moins un point d'accès radio ;
- l'émission (93) par chaque unité de contrôle de grappe comportant au moins un point d'accès radio, à destination de chaque unité de contrôle de grappe de référence, d'un message de compte rendu incluant une identité de la cellule à laquelle appartient ladite unité de contrôle de grappe comportant au moins un point d'accès radio, et une liste des identités des terminaux mobiles associés à ladite unité de contrôle de grappe de référence pour lesquels l'étape de recherche exécutée par ladite unité de contrôle de grappe comportant au moins un point d'accès radio a échoué ;
- la mise à jour (94) de la table de localisation de chaque unité de contrôle de grappe de référence. sur la base des messages de compte rendu qu'elle a reçus ; et
- la construction (95) par chaque unité de contrôle de grappe de référence de la liste des terminaux mobiles recherchés qu'elle diffusera lors du cycle suivant, en y incluant une identité de chaque terminal mobile non incluse dans la liste d'identités de terminaux mobiles recherchés qu'elle a émise au cours du cycle courant et figurant dans une liste qu'elle a reçue dans un desdits messages de compte rendu.

7. Procédé selon la revendication 6, **caractérisé en ce que** chaque unité de contrôle de grappe comportant au moins un point d'accès radio construit un message de compte rendu incluant une identité de sa cellule de rattachement et une liste des identités de tous les terminaux mobiles pour lesquels l'étape de recherche qu'elle a exécutée a échoué, et diffuse ce message de compte rendu à destination de chaque unité de contrôle de grappe de référence, chaque unité de contrôle de grappe traitant les messages de compte rendu pour ne tenir compte que des terminaux mobiles qui lui sont associés.

## Patentansprüche

1. Signalisierungsverwaltungsverfahren in einem Vermittlungssystem, das mehrere Bündelsteuerungseinheiten (11-13, 21-23, 31-34, 41) umfasst, welche jeweils Zugangspunkte zum System bereitstellen, Funkstationen (15, 16, 25, 35, 45), welche vorgesehen sind, um Funkverbindungen mit Mobilendgeräten (52, 53) zu schaffen und welche jeweils mit einem Funkzugangspunkt einer jeweiligen Bündelsteuerungseinheit verbunden sind, wobei die Mobilendgeräte jeweils mit Referenzbündelsteuereinheiten in Beziehung stehen, wobei bei dem Verfahren die eine Errichtung einer Kommunikation über einen Zugangspunkt betreffende Signalisierungsverarbeitung hinsichtlich dieses Zugangspunkts zum einen Steuerungsaufgaben des Zugangspunkts (MGO, IGO) umfasst, um vom Zugangspunkt ausgehende Ereignisse in Systemsignalisierungsbotschaften zu übersetzen und Befehle zum Zugangspunkt zu adressieren, und andererseits Rufverwaltungsaufgaben (MAS) zur Verarbeitung von Anfragen, die den Zugangspunkt betreffen und zum Überwachen der Steuerungsaufgaben des Zugangspunkts bei der Errichtung der Kommunikation, wobei
für die Errichtung einer Kommunikation mit einem Mobilendgerät, das in Verbindung steht mit einer Funkstation, die mit einem Funkzugangspunkt einer besuchten Bündelsteuerungseinheit verbunden ist, die verschieden ist von der mit dem Mobilendgerät in Beziehung stehenden Referenzbündelsteuerungseinheit, werden die Rufverwaltungsaufgaben, die sich auf den Funkzugangspunkt beziehen in der Referenzbündelsteuerungseinheit ausgeführt, und ein Teil zumindest der Steuerungsaufgaben des Funkzugangspunkts wird in der besuchten Bündelsteuerungseinheit ausgeführt, wobei der Verkehrspfad, der in dem Vermittlungssystem zwischen dem Funkzugangspunkt und einem zweiten Zugangspunkt zum Tragen der Kommunikation errichtet ist, unabhängig vom Signalisierungspfad gewählt ist, der verwendet wird, um die dem Vermittlungssystem eigenen Signalisierungsbotschaften zwischen der besuchten Bündelsteuerungseinheit, der Referenzbündelsteuerungseinheit und der Bündelsteuerungseinheit des zweiten Zugangspunkts auszutauschen,
**dadurch gekennzeichnet, dass** bei der Errichtung einer von einem Mobilendgerät eingeleiteten Kommunikation in Verbindung mit einer Funkstation, die mit einem Funkzugangspunkt einer besuchten Bündelsteuerungseinheit verbunden ist, die sich von der Referenzbündelsteuerungseinheit unterscheidet, die mit dem Mobilendgerät in Beziehung steht, die Steuerungsaufgaben des Zugangspunkts, die in der besuchten Bündelsteuerungseinheit ausgeführt werden, die Aussendung einer Errichtungsbotschaft an mehrere Bündelsteuerungseinheiten umfassen, enthaltend eine Identität des Mobilendgeräts, und dadurch, dass jede Bündelsteuerungseinheit, welche die Errichtungsbotschaft empfängt, bestimmt, ob sie die Referenzbündelsteuerungseinheit ist, die mit dem Mobilendgerät in Beziehung steht, und wenn dem so ist, eine Rufverwaltungsaufgabe (MAS) bezüglich des Funkzugangspunkts einleitet.

2. Verfahren nach Anspruch 1, **dadurch gekennzeichnet, dass** bei der Errichtung einer Kommunikation zu einem Mobilendgerät, das über eine Funkstation mit einem Funkzugangspunkt einer besuchten Bündelsteuerungseinheit verbunden ist, die sich von der Referenzbündelsteuerungseinheit unterscheidet, die mit dem Mobilendgerät in Beziehung steht, die Steuerungsaufgaben des Funkzugangspunkts umfassen:
- auf der Ebene der mit dem Mobilendgerät in Beziehung stehenden Referenzbündelsteuerungseinheit, Aussenden einer Errichtungsbotschaft, die eine Identität des Mobilendgeräts enthält, an eine oder mehr mit Funkstationen verbundenen Bündelsteuerungseinheiten;
- auf der Ebene mindestens einer Bündelsteuerungseinheit, die die Errichtungsbotschaft empfangen hat, das Steuern mindestens eines Funkzugangspunkts, um nach dem Mobilendgerät zu suchen; und
- auf der Ebene der besuchten Bündelsteuerungseinheit, wenn diese die Errichtungsbotschaft erhalten hat, das Aussenden einer positiven Alarmbotschaft zur Referenzbündelsteuerungseinheit, wobei die besuchte Bündelsteuerungseinheit und die Referenzbündelsteuerungseinheit danach Signalisierungsbotschaften austauschen, um die Kommunikation zu errichten.

3. Verfahren nach einem der Ansprüche 1 oder 2, **dadurch gekennzeichnet, dass** die mit Funkstationen ausgerüsteten Bündelsteuerungseinheiten in Zellen verteilt sind, und dass eine periodische Lokalisationsprozedur vorgesehen ist, um in jeder Referenzbündelsteuerungseinheit eine Lokalisationstabelle aktuell zu halten, welche für jedes mit der Referenzbündelsteuerungseinheit in Beziehung stehende und sich in Verbindung mit einer Funkstation befindende Mobilendgerät eine Lokalisierungszelle angibt, einschließlich mindestens der Bündelsteuerungseinheit, welche den Funkzugangspunkt enthält, mit dem die Funkstation verbunden ist.

4. Verfahren nach den Ansprüchen 2 und 3, **dadurch gekennzeichnet, dass** bei der Errichtung einer Kommunikation zum Mobilendgerät, das über eine Funkstation mit einem Funkzugangspunkt einer besuchten Bündelsteuerungseinheit verbunden ist, der Schritt des Aussendens der Errichtungsbotschaft durch die Referenzbündelsteuerungseinheit, die mit dem Mobilendgerät in Beziehung steht, umfasst:
- das Aussenden einer Errichtungsbotschaft, welche eine Identität des Mobilendgeräts enthält, an jede Bündelsteuerungseinheit der Lokalisierungszelle, die für das Mobilendgerät in der Lokalisierungstabelle angegeben ist, welche in der Referenzbündelsteuerungseinheit gespeichert ist; und
- wenn keine positive Alarmbotschaft aus der oder den Bündelsteuerungseinheiten der angegebenen Lokalisierungszelle von der Referenzbündelsteuerungseinheit empfangen wird, das Aussenden einer Errichtungsbotschaft durch die Referenzbündelsteuerungseinheit, welche die Identität des Endgeräts und eine Identität einer Suchzone enthält, welche einem Satz von Bündelsteuerungseinheiten entspricht, die mit Funkzugangspunkten ausgerüstet sind, wobei die Suchzone als Funktion der Lokalisierungszelle bestimmt wird, die durch Befragen einer Nachbarschaftstabelle, welche in der Referenzbündelsteuerungseinheit gespeichert ist, bestimmt ist.

5. Verfahren nach Anspruch 4, **dadurch gekennzeichnet, dass** wenn von der Referenzbündelsteuerungseinheit keine positive Alarmbotschaft aus der oder den Bündelsteuerungseinheiten der Lokalisierungszelle, welche in den Bündelsteuerungseinheiten des der Suchzone entsprechenden Satzes angegeben sind, empfangen wird, die Referenzbündelsteuerungseinheit eine Errichtungsbotschaft aussendet, welche die Identität des Mobilendgeräts enthält, an jede Bündelsteuerungseinheit, welche mindestens einen Funkzugangspunkt umfasst.

6. Verfahren nach einem der Ansprüche 3 bis 5, **dadurch gekennzeichnet, dass** jede Bündelsteuerungseinheit, welche'mindestens einen Funkzugangspunkt umfasst, eine Liste der Identitäten von bedienten Mobilendgeräten speichert, und dadurch, dass die periodische Lokalisierungsprozedur aufeinanderfolgende Lokalisierungszyklen umfasst, welche die folgenden Schritte umfassen:
- Aussenden (90) einer Liste von Identitäten von gesuchten Mobilendgeräten durch jede Referenzbündelsteuerungseinheit, an jede Bündelsteuerungseinheit, welche mindestens einen Funkzugangspunkt umfasst;
- durch jede Bündelsteuerungseinheit, welche mindestens einen Funkzugangspunkt umfasst, Suchen (91) von Endgeräten, die in ihrer Liste von Identitäten von bedienten Mobilendgeräten identifiziert sind, und Endgeräte, die in jeder Liste von Identitäten von gesuchten mobilen Endgeräten identifiziert sind, die aus einer Referenzbündelsteuerungseinheit empfangen wurde;
- Aktualisieren (92) der Liste von Identitäten von Mobilendgeräten, die durch jede Bündelsteuerungseinheit bedient werden, welche mindestens einen Funkzugangspunkt umfasst, mit den Identitäten der Mobilendgeräte, die bei dem Suchschritt lokalisiert wurden, der von der Bündelsteuerungseinheit ausgeführt wurde, welche mindestens einen Funkzugangspunkt umfasst;
- durch jede Bündelsteuerungseinheit, die mindestens einen Funkzugangspunkt umfasst, Aussenden (93) an jede Referenzbündelsteuerungseinheit einer Berücksichtigungsbotschaft, welche eine Identität der Zelle enthält, zu welcher die Bündelsteuerungseinheit gehört, welche mindestens einen Funkzugangspunkt umfasst, und eine Liste der Identitäten der Mobilendgeräte, welche mit der Referenzbündelsteuerungseinheit in Beziehung stehen, für welche der Suchschritt, der von der Bündelsteuerungseinheit durchgeführt wurde, welche mindestens einen Funkzugangspunkt umfasst, fehlschlug;
- Aktualisierung (94) der Lokalisierungstabelle jeder Referenzbündelsteuerungseinheit auf der Grundlage der von ihr empfangenen Berücksichtigungsbotschaften, und
- durch jede Referenzbündelsteuerungseinheit, das Konstruieren (95) der Liste von gesuchten Mobilendgeräten, welche sie beim folgenden Zyklus aussenden wird, wobei darin eine Identität jedes Mobilendgeräts eingefügt wird, die nicht in der Liste von Identitäten von gesuchten Mobilendgeräten enthalten war, die sie im Verlauf des laufenden Zyklus ausgesendet hat und in einer Liste erschien, welche sie in einer der Berücksichtigungsbotschaften empfangen hat.

7. Verfahren nach Anspruch 6, **dadurch gekennzeichnet, dass** jede Bündelsteuerungseinheit, die mindestens einen Funkzugangspunkt enthält, eine Berücksichtigungsbotschaft konstruiert, die eine Identität ihrer Zugehörigkeitszelle enthält, und eine Liste der Identitäten von allen Mobilendgeräten, für welche der Suchschritt, den sie ausgeführt hat, fehlgeschlagen ist, und diese Berücksichtigungsbotschaft an jede Referenzbündelsteuerungseinheit aussendet, wobei jede Bündelsteuerungseinheit die Berücksichtigungsbotschaft verarbeitet, um nur die Mobilendgeräte zu berücksichtigen, mit der sie in Beziehung steht.

## Claims

1. Method for managing signalling in a self-switching system having a plurality of cluster control units (11-13, 21-23, 31-34, 41) each supplying points of access to the system, radio terminals (15, 16, 25, 35, 45) being provided to establish radio links with mobile terminals (52, 53) and each being connected to a radio access point of a respective cluster control unit, the mobile terminals being associated respectively with reference cluster control units, a method in which the signalling processing relating to the establishment of communication via an access point comprises - with respect to this access point - on the one hand, tasks for control of the access point (MGO, IGO) to translate events issuing from the access point into signalling messages of the system and to send commands to the access point, and on the other hand, call management tasks (MAS) to process requests concerning the access point and to supervise the tasks of controlling the access point during establishment of the communication, wherein
for establishment of a communication with a mobile terminal linked to a radio terminal connected to a radio access point of a visited cluster control unit different from the reference cluster control unit associated with the said mobile terminal, the call management tasks relating to the said radio access point are carried out in the reference cluster control unit and at least part of the tasks for controlling the radio access point are carried out in the said visited cluster control unit, the path of traffic established in the self-switching system between the radio access point and a second access point for supporting the communication being selected independently of the signalling path used to exchange signalling messages appertaining to the self-switching system between the visited cluster control unit, the reference cluster control unit and the cluster control unit to which the said second access point pertains,
**characterised in that**, during establishment of a communication initiated by a mobile terminal linked to a radio terminal connected to a radio access point of a visited cluster control unit different from the reference cluster control unit associated with the said mobile terminal, the tasks of access point control carried out in the said visited cluster control unit comprise transmitting to a plurality of cluster control units an establishment message including an identification of the said mobile terminal, and **in that** each cluster control unit receiving the said establishment message determines whether it is the reference cluster control unit associated with the said mobile terminal and, if so, initiates a call management task (MAS) with respect to the said radio access point.

2. Method as claimed in claim 1, **characterised in that** during establishment of a communication destined for a mobile terminal connected by means of a radio terminal to a radio access point of a visited cluster control unit different from the reference cluster control unit associated with the said mobile terminal, the tasks of controlling the radio access point comprise:
- at the reference cluster control unit associated with the mobile terminal, emitting an establishment message including an identification of the destination mobile terminal of one or a plurality of cluster control units connected to radio terminals;
- at at least one cluster control unit having received the said establishment message, commanding at least one radio access point to seek the mobile terminal; and
- at the said visited cluster control unit, if this has received the said establishment message, emitting a positive alarm message to the reference cluster control unit, the visited cluster control unit and the reference cluster control unit then exchanging signalling messages in order to establish communication.

3. Method as claimed in any one of claims 1 to 2, **characterised in that** the cluster control units provided with radio terminals are distributed in cells, and **in that** a periodic locating procedure is provided in order, in each reference cluster control unit, to keep up to date a locating table indicating, for each mobile terminal associated with the said reference cluster control unit and linked to a radio terminal, a locating cell including at least the cluster control unit comprising the radio access point to which the said radio terminal is connected.

4. Method as claimed in claims 2 and 3, **characterised in that** during establishment of a communication destined for a mobile terminal connected by means of a radio terminal to a radio access point of a visited cluster control unit, the step of emitting the establishment message by the reference cluster control unit associated with the mobile terminal comprises:
- emitting an establishment message including an identification of the destination mobile terminal of each cluster control unit of the locating cell indicated for the said mobile terminal in the said locating table stored in the reference cluster control unit; and
- if no positive alarm message is received by the reference cluster control unit from the cluster control unit(s) of the said indicated locating cell, transmitting by the reference cluster control unit an establishment message including the identification of the terminal and an identification of a search zone corresponding to a group of cluster control units provided with radio access points, the said search zone being determined according to the said indicated locating cell by consulting a proximity table stored in the reference cluster control unit.

5. Method as claimed in claim 4, **characterised in that** if no positive alarm message is received by the reference cluster control unit from the cluster control unit(s) of the said indicated locating cell and the cluster control units of the group corresponding to the said search zone, the reference cluster control unit transmits an establishment message including the identification of the destination mobile terminal of each cluster control unit comprising at least one radio access point.

6. Method as claimed in any one of claims 3 to 5, **characterised in that** each cluster control unit comprising at least one radio access point stores a list of identifications of served mobile terminals, and **in that** the periodic locating procedure comprises successive locating cycles each comprising the following steps:
- transmitting (90) by each reference cluster control unit a list of identifications of sought destination mobile terminals of each cluster control unit comprising at least one radio access point;
- seeking (91), by each cluster control unit comprising at least one radio access point, terminals identified in its list of identifications of served mobile terminals and terminals identified in each list of identifications of sought mobile terminals, which list is received from a reference cluster control unit;
- updating (92) the list of identifications of mobile terminals served by each cluster control unit comprising at least one radio access point with the identifications of mobile terminals located in the search step carried out by the said cluster control unit comprising at least one radio access point;
- emitting (93), by each cluster control unit comprising at least one radio access point, to each reference cluster control unit, a report message including an identification of the cell to which the said cluster control unit comprising at least one radio access point appertains, and a list of the identifications of the mobile terminals associated with the said reference cluster control unit for which terminals the search step carried out by the said cluster control unit comprising at least one radio access point has failed;
- updating (94) the locating table of each reference cluster control unit on the basis of report messages which it has received; and
- constructing (95), by each reference cluster control unit, the list of mobile terminals sought which it will transmit during the following cycle, including therein an identification of each mobile terminal not included in the list of identifications of mobile terminals sought which it has transmitted during the current cycle and figuring in a list which it has received in one of the said report messages.

7. Method as claimed in claim 6, **characterised in that** each cluster control unit comprising at least one radio access point constructs a report message including an identification of its attachment cell and a list of identifications of all the mobile terminals for which the search step which it has carried out has failed, and transmits this report message to each reference cluster control unit, each cluster control unit processing the report messages in order to take account of only those mobile terminals which are associated with it.
